Europäisches Patentamt

(19) **European Patent Office**

**Office européen des brevets**

(11) Numéro de publication: **0 246 217 B1**

## (12) FASCICULE DE BREVET EUROPEEN

(45) Date de publication du fascicule du brevet:
07.03.90

(51) Int. Cl.⁴: **F28C 1/00**

(21) Numéro de dépôt: **87870062.4**

(22) Date de dépôt: **06.05.87**

(54) **Ensemble de déflecteurs pour installation de rejet de gaz brûlés dans une tour de réfrigération.**

(30) Priorité: **14.05.86 BE 216658**

(43) Date de publication de la demande:
**19.11.87 Bulletin 87/47**

(45) Mention de la délivrance du brevet:
**07.03.90 Bulletin 90/10**

(84) Etats contractants désignés:
**AT CH ES FR GB GR IT LI LU NL SE**

(56) Documents cités:
**EP-A- 0 198 146**
**DE-C- 3 413 178**
**FR-A- 2 290 942**

(73) Titulaire: **HAMON-SOBELCO S.A., 50-58, Rue Capouillet, B-1060 Bruxelles(BE)**

(72) Inventeur: **Pflaumbaum, Heinz-Jürgen,
Brunsbergweg 6A, D-5810 Witten-Heven(DE)**
Inventeur: **Lemmens, Pierre Lucien, Rue Pieter 56,
B-1190 Bruxelles(BE)**
Inventeur: **Ruscheweyh, Hans, Dr.-Ing., Teichstrasse 8,
D-5100 Aachen(DE)**

(74) Mandataire: **de Kemmeter, François et al, Cabinet
Bede 13, avenue Antoine Depage, B-1050 Bruxelles(BE)**

ACTORUM AG

## Description

La présente invention se rapporte aux installations de rejet dans les tours de réfrigération atmosphériques, dites pour abréger "tours",des gaz brûlés épurés par voie humide et provenant de chaudières à combustibles fossiles de centrales électriques, dits pour abréger "gaz".

Une telle installation est décrite notamment dans la demande de brevet EP-A 0 198 146 appartenant à la demanderesse. Cette demande fait partie de l'état de la technique en vertu de l'art. 54(3).

Cette installation est constituée d'au moins une canalisation horizontale amenant les gaz dans la tour, au-dessus de son corps d'échange, de sa distribution d'eau et de ses séparateurs de gouttes, pourvue à son niveau supérieur d'une fente s'étendant sur presque toute sa longueur, et surmontée de caissons recevant les gaz par cette fente et les rejetant horizontalement dans la tour à travers des panneaux de séparateur de gouttes.

Tandis que les gaz à l'entrée de la canalisation ont une relativement grande vitesse généralement 15 à 25 m/s, ils sont rejetés dans la tour à une relativement faible vitesse, qui doit être comprise entre une limite inférieure et une limite supérieure entre lesquelles les séparateurs de gouttes utilisés sont efficaces. Ces limites sont par exemple respectivement de 3 m/s et de 6 m/s.

L'uniformité de vitesse des gaz ainsi réalisée à la sortie de l'installation doit être réalisée tant sur la longueur des panneaux que sur leur hauteur.

Dans une première configuration de l'installation décrite dans la demande européenne précitée, l'uniformité dans le sens de la longueur de la canalisation est recherchée par l'étroitesse de la fente de la canalisation, créant des pertes de charge relativement importantes au passage du gaz de la canalisation vers les caissons. Cette configuration relativement simple a l'inconvénient, d'une part, de provoquer une importante consommation d'énergie pour vaincre les pertes de charges au passage de la fente et, d'autre part, de ne pas assurer une plage de vitesse aussi étroite que celle souhaitée.

Une autre configuration possible est la suivante: la fente est de relativement grande largeur et l'uniformité longitudinale de la vitesse des gaz à la sortie des panneaux de séparateurs de gouttes est réalisée par des déflecteurs situés à l'intérieur des canalisations. Tandis que l'uniformité de vitesse des gaz est dans ces cas très satisfaisante, le coût de tels déflecteurs est très élevé.

L'invention a pour objectifs un dispositif de distribution des gaz des canalisations aux caissons
- dont le débit soit quasi égal tout au long de la canalisation,
- dont l'écoulement gazeux à l'entrée des caissons permette une distribution des gaz suffisamment uniforme sur la hauteur des panneaux de séparateurs de gouttes situés dans les faces latérales de ces caissons,
- qui soit relativement bon marché.

L'invention vise en particulier à uniformiser les quantités de gaz brûlés dans les caissons et introduire ainsi les gaz dans la tour de refrigération par les panneaux des séparateurs de gouttes de la façon la plus uniforme possible.

Ces objectifs sont atteints par l'installation d'un ensemble de déflecteurs situés à la base des caissons.

Ces déflecteurs sont disposés perpendiculairement à la canalisation que surmontent les caissons, sur toute la largeur de ces caissons. Ils ont un profil sensiblement en arc de cercle, éventuellement en arc d'ellipse ou d'ovale, s'étendant sur un angle d'ouverture au centre éventuellement différent d'un déflecteur au suivant, compris de préférence entre 70 et 130° ; le rayon de l'arc a une valeur comprise entre 5 et 25 % de la largeur des déflecteurs. Ces déflecteurs franchissent la fente de la canalisation ; leurs bords inférieurs sont soit tangents au profil de la canalisation, soit sécants à ce profil, avec comme position la plus basse possible celle où ils touchent les lèvres de la fente de la canalisation, soit situés légèrement au-dessus de la canalisation. La position exacte sera généralement déterminée par des raisons constructives.

Les déflecteurs sont positionnés en présentant leur concavité vers l'amont de l'écoulement de la canalisation et sont généralement légèrement inclinés, de bas en haut, d'aval vers l'amont de 0 à 30°, pouvant éventuellement varier d'un déflecteur au suivant.

La fente a une largeur comprise de préférence entre 25 et 36 % du diamètre de la canalisation, largeur qui peut varier, soit de façon continue (fente trapézoïdale), soit par paliers, le long de la canalisation. La hauteur des déflecteurs étant relativement grande, soit entre le quart et le cinquième de la hauteur des panneaux de séparateurs de gouttes, leurs niveaux supérieurs dépassent généralement la base de ces panneaux. Pour ne pas entraver l'expansion latérale du gaz et avoir une trop faible vitesse de gaz au bas des panneaux, il y a lieu de constituer les déflecteurs avec des échancrures à leurs extrémités. Ces échancrures ont une hauteur de l'ordre de grandeur de 50 % de la hauteur des déflecteurs et une largeur correpondant approximativement à la partie du caisson à laquelle ne correspond pas de fente de canalisation.

Pour des raisons économiques de fabrication, l'installation est constituée d'un nombre aussi grand que possible de déflecteurs identiques, tant que les écarts à l'uniformité de vitesse à la traversée des séparateurs de gouttes sont acceptables. Enfin, l'espacement entre les déflecteurs est égal à 1 à 2 fois leur hauteur.

Dans les dessins ci-annexés qui illustrent l'invention,

- la figure 1 est une vue en coupe longitudinale de caissons à déflecteurs et panneaux séparateurs de gouttes surmontant une canalisation ;
- la figure 2 est une vue en coupe transversale suivant la ligne A-A de la figure 1 ;
- la figure 3 est une vue en plan de dessus montrant la configuration d'une fente d'allure trapézoïdale ;
- la figure 4 est, en coupe transversale, une vue à plus grande échelle d'un exemple de montage d'un déflecteur sur une canalisation ;

- la figure 5A est une vue en coupe suivant la ligne A-A de la figure 4 et les figures 5B, 5C et 5D représentent un support de déflecteur en élévation frontale, latérale et en plan respectivement ;
- la figure 6 montre les caractéristiques géométriques d'un déflecteur.

Dans ces différentes figures, les mêmes notations de référence désignent les mêmes éléments.

Comme représenté sur les dessins, une canalisation 1 horizontale amenant les gaz dans la tour, au-dessus de sont corps d'échange, de sa distribution d'eau et de ses séparateurs de gouttes, est pourvue à son niveau supérieur d'une fente 2 s'étendant sur presque toute sa largeur et surmontée de caissons 3 recevant les gaz par cette fente et les rejetant horizontalement dans la tour à travers des panneaux de séparateurs de gouttes 4.

A la base des caissons 3 est prévu un ensemble de déflecteurs 5.

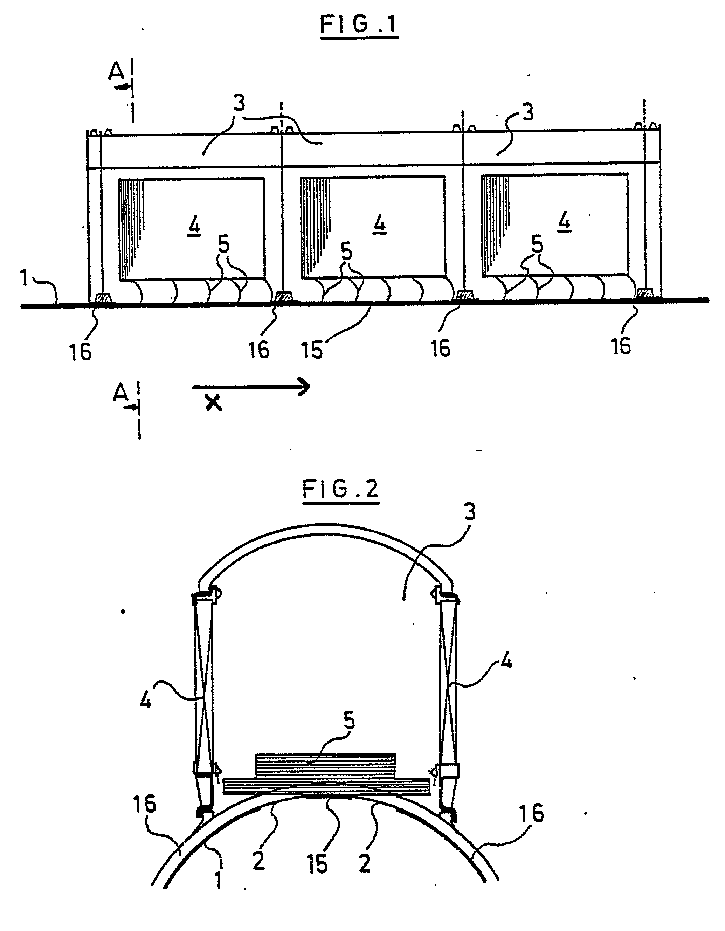

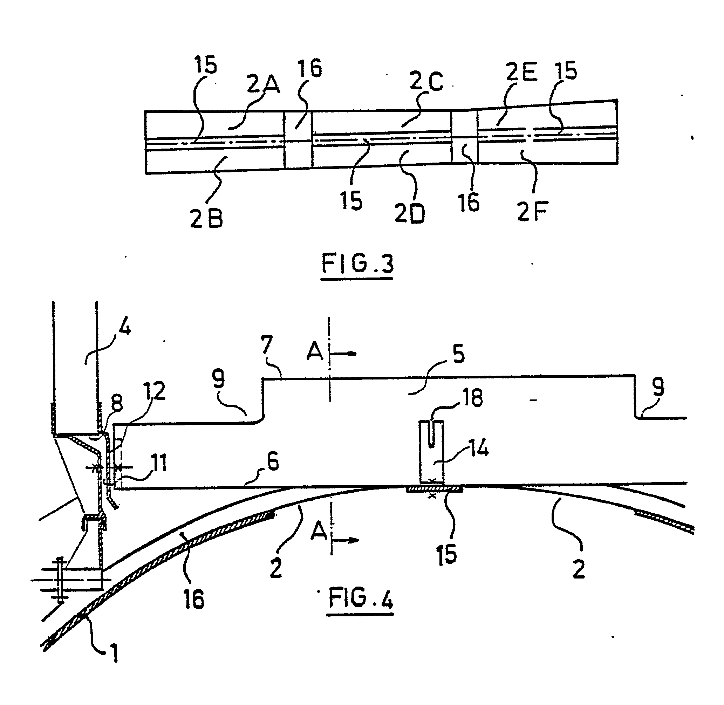

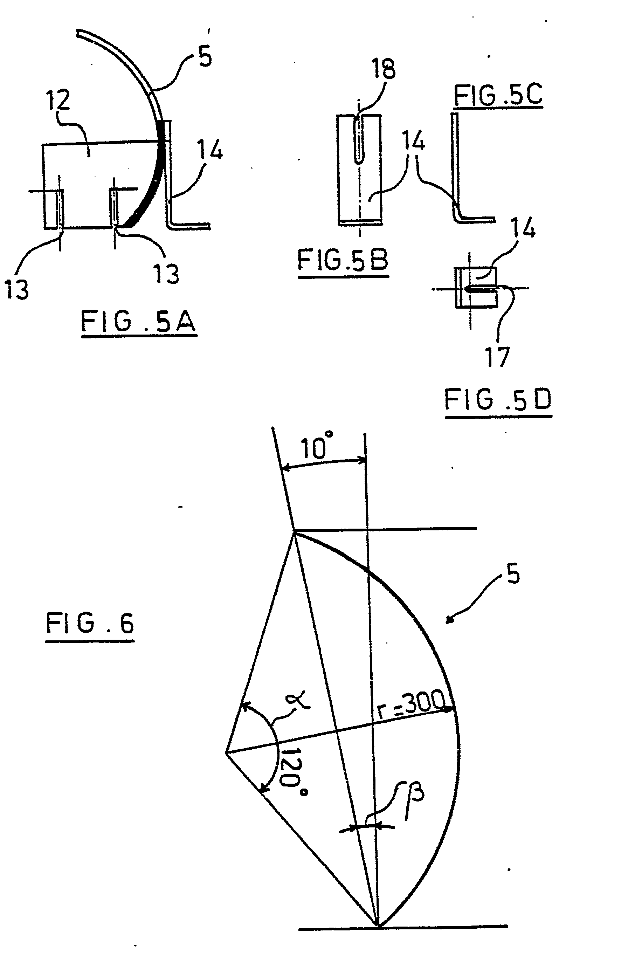

Les déflecteurs 5 sont disposés perpendiculairement à la canalisation que surmontent les caissons. Comme on le voit sur les figures 2 et 4, ces déflecteurs s'étendent pratiquement sur toute la largeur des caissons et leurs bords inférieurs 6 sont représentés tangents au profil de la canalisation 1. Les figures 1, 5 et 6 illustrent la forme des déflecteurs en arc de cercle, bien qu'ils puissent également dessiner un arc d'ellipse ou d'ovale, s'étendant sur un angle d'ouverture au centre de 120° par exemple ($\alpha$ , fig.6). Les déflecteurs 5 présentent leur concavité vers l'amont de l'écoulement, le sens de l'ecoulement étant indiqué par la flèche X sur la figure 1. Ils sont représentés inclinés de 10° ($\beta$ , fig.6).

Les figures 1, 2 et 4 montrent la hauteur relativement grande des déflecteurs comparés aux panneaux de séparateurs de gouttes. On voit en particulier que leurs niveaux supérieurs 7 dépassent la base 8 de ces panneaux.

Les déflecteurs présentent par ailleurs des échancrures 9 à leurs extrémités. Ces échancrures 9 ont une hauteur de l'ordre de grandeur de 50 % de la hauteur des déflecteurs et une largeur correspondant approximativement à la partie du caisson à laquelle ne correspond pas de fente de canalisation.

Les figures 4 et 5 représentent un montage de déflecteurs. le déflecteur 5 est fixé aux supports 11 des séparateurs de gouttes par des pièces 12 pourvues de boutonnières 13. Un support 14 solidarisant le déflecteur à la canalisation est fixé par écrous et boulons à une bande 15 prévue à la partie supérieure de la canalisation, laquelle est, par ailleurs, pourvue de renforcements circulaires interrompus 16 répartis en quelques endroits sur la longueur du tube. L'ajustement de chaque support 14 par rapport à la bande 15 se fait grâce à une boutonnière 17. Le support 14 est fixé au déflecteur 5 également par écrous et boulons et y est ajusté par une boutonnière 18.

La figure 3 montre un exemple de fente 2 trapézoïdale, variant de façon continue entre 1,22 et 1,45 m, convenant pour une canalisation de 5,00 m de diamètre par exemple. Cette fente est constituée par des ajourages 2A, 2B, 2C, 2D, 2E, 2F.

## Revendications

1. Installation de rejet des gaz brûlés dans une tour de réfrigération, cette installation étant constituée d'au moins une canalisation (1) horizontale amenant les gaz dans la tour au-dessus de son corps d'échange, de sa distribution d'eau et de ses séparateurs de gouttes, cette canalisation étant pourvue à son niveau supérieur d'une fente (2) qui s'étend sur presque toute sa longueur et est surmontée de caissons (3) recevant les gaz par cette fente et les rejetant horizontalement dans la tour à travers des panneaux (4) de séparateurs de gouttes, caractérisée par un ensemble de déflecteurs (5) situés à la base des caissons.

2. Installation suivant la revendication 1, caractérisée en ce que les déflecteurs (5) sont disposés perpendiculairement à la canalisation (1) sur toute la largeur des caissons (3).

3. Installation suivant les revendications 1 et 2, caractérisée en ce que les déflecteurs (5) ont un profil sensiblement en arc de cercle, d'ellipse ou d'ovale.

4. Installation suivant la revendication 3, caractérisée par des déflecteurs (5) arqués dont l'angle d'ouverture au centre ($\alpha$) est compris entre 70 et 130°, le rayon de l'arc formé par ces déflecteurs (5) ayant une valeur comprise entre 5 et 25 % de la largeur des déflecteurs.

5. Installation suivant la revendication 4, caractérisée en ce que l'angle d'ouverture ($\alpha$) varie d'un déflecteur à l'autre.

6. Installation suivant les revendications 1-5, caractérisée par des déflecteurs (5) dont les bords inférieur (6) sont tangents au profil de la canalisation.

7. Installation suivant les revendications 1-5, caractérisée par des déflecteurs (5) dont les bords inférieurs (6) sont sécants au profil de la canalisation.

8. Installation suivant les revendications 1-7, caractérisée par des déflecteurs (5) légèrement inclinés de bas en haut, d'aval vers l'amont de 0 à 30° (angle $\beta$, Fig.6).

9. Installation suivant la revendication 8, caractérisée par des déflecteurs dont l'inclinaison ($\beta$) varie d'un déflecteur à l'autre.

10. Installation suivant les revendications 1-9, caractérisée par une canalisation dont la fente (2) a une largeur comprise entre 25 et 36 % du diamètre de la canalisation 1.

11. Installation suivant les revendications 1-10, caractérisée en ce que les déflecteurs (5) sont pourvus, à leurs extrémités, d'échancrures (9).

12. Installation suivant la revendication 11, caractérisée en ce que les échancrures (9) ont une hauteur de l'ordre de grandeur de 50 % de la hauteur des déflecteurs et une largeur correspondant approximativement à la partie du caisson (3) à laquelle ne correspond pas de fente de canalisation.

## Patentansprüche

1. Vorrichtung zum Ausstoß von Rauchgasen in einen Kühlturm, wobei diese Vorrichtung zumindest aus einer horizontalen Leitung (1) besteht, die die Gase in den Turm oberhalb seines Austauschers, seiner Wasserversorgung und seiner Tropfenfänger leitet, und diese Leitung auf ihrer Oberkante mit einem Spalt (2) versehen ist, der sich über fast ihre ganze Länge erstreckt und von Behältern (3) überlagert ist, die die Gase durch diesen Schlitz erhalten und sie zwischen Tropfenfängerplatten (4) hindurch horizontal in den Turm ausstoßen, gekennzeichnet durch eine Deflektoreinheit (5), die am Boden der Behälter angeordnet ist.

2. Vorrichtung nach Anspruch 1, dadurch gekennzeichnet, daß die Deflektoren (5) senkrecht zur Leitung (1) über die ganze Breite der Behälter (3) vorgesehen sind.

3. Vorrichtung nach den Ansprüchen 1 und 2, dadurch gekennzeichnet, daß die Deflektoren (5) ein im wesentlichen kreisbogen-, ellipsenförmiges oder ovales Profil haben.

4. Vorrichtung nach Anspruch 3, gekennzeichnet durch bogenförmige Deflektoren (5), deren auf das Zentrum bezogener Öffnungswinkel ($\alpha$) zwischen 70 und 130° beträgt, wobei der Radius des durch die Deflektoren (5) gebildeten Bogens einen Wert zwischen 5 und 25% der Breite der Deflektoren hat.

5. Vorrichtung nach Anspruch 4, dadurch gekennzeichnet, daß der Öffnungswinkel ($\alpha$) sich von einem Deflektor zum anderen ändert.

6. Vorrichtung nach den Ansprüchen 1–5, gekennzeichnet durch Deflektoren (5), deren Unterkanten (6) das Profil der Leitung tangieren.

7. Vorrichtung nach den Ansprüchen 1–5, gekennzeichnet durch Deflektoren (5), deren Unterkanten (6) das Profil der Leitung schneiden.

8. Vorrichtung nach den Ansprüchen 1–7, gekennzeichnet durch leicht von unten nach oben in Strömungsrichtung zunehmend von 0 bis 30° geneigte Deflektoren (5) (Winkel $\beta$, Fig. 6).

9. Vorrichtung nach Anspruch 8, gekennzeichnet durch Deflektoren, deren Neigung ($\beta$) sich von einem Deflektor zum anderen ändert.

10. Vorrichtung nach den Ansprüchen 1–9, gekennzeichnet durch eine Leitung, deren Spalt (2) eine Breite aufweist, die zwischen 25 und 36% des Durchmessers der Leitung (1) beträgt.

11. Vorrichtung nach den Ansprüchen 1–10, dadurch gekennzeichnet, daß die Deflektoren (5) an ihren Extremitäten mit bogenförmigen Ausschnitten (9) versehen sind.

12. Vorrichtung nach Anspruch 11, dadurch gekennzeichnet, daß die bogenförmigen Ausschnitte (9) eine Höhe in der Größenordnung von 50% der Höhe der Deflektoren und eine Breite aufweisen, die in etwa mit dem Teil des Behälters (3) übereinstimmt, der nicht mit dem Leitungsspalt korrespondiert.

**Claims**

1. An installation for discharging exhaust gases into a colling tower, this installation being composed of at least one horizontal pipe line (1) leading the gases into the tower above its exchange body, its water supply and its drift eliminators this pipe line having, at its upper level, a slit (2) which exends over almost all its length and is surmounted by chambers (3) receiving the gases through this slit and discharging them horizontally into the tower through the panels (4) of drift eliminators, characterized by a group of deflectors (5) situated at the base of the chambers.

2. An installation in accordance with Claim 1, characterized in that the deflectors (5) are arranged perpendicular to the pipe line (1) over the whole breadth of the chambers (3).

3. An installation in accordance with Claims 1 and 2, characterized in that the profile of the deflectors (5) is approximately the arc of a circle, of an ellipse or of an oval.

4. An installation in accordance with Claim 3, characterized by arc-shaped deflectors (5) whose aperture angle at the centre ($\alpha$) is between 70 and 130°, the value of the radius of the arc formed by these deflectors (5) being between 5 and 25% of the width of the deflectors.

5. An installation in accordance with Claim 4, characterized in that the aperture angle ($\alpha$) varies from one deflector to another.

6. An installation in accordance with Claims 1–5, characterized by deflectors (5) whose lower edges (6) are tangent to the profile of the pipe line.

7. An installation in accordance with Claims 1–5, characterized by deflectors (5) whose lower edges (6) are secant to the profile of the pipe line.

8. An installation in accordance with Claims 1–7, characterized by deflectors (5) slightly inclined from bottom to top, from downstream to upstream from 0 to 30° (angle $\beta$, Fig. 6).

9. An installation in accordance with Claim 8, characterized by deflectors whose slope ($\beta$) varies from one deflector to another.

10. An installation in accordance with Claims 1–9, characterized by a pipe line whose slit (2) width is between 25 and 36% of the diameter of the pipe line 1.

11. An installation in accordance with Claims 1–10, characterized in that the deflectors (5) have indentations (9) at their ends.

12. An installation in accordance with Claim 11, characterized in that the height of the indentations (9) is half the height of the deflectors, the width of the former approximately corresponding to the part of the chamber (3) to which no pipe-line slit corresponds.

## FIG.1

## FIG.2

FIG.3

FIG.4

FIG .5A

FIG.5B

FIG .5C

FIG .5D

FIG . 6